(19) Europäisches Patentamt
European Patent Office
Office européen des brevets

(11) **EP 3 433 303 B1**

(12) **FASCICULE DE BREVET EUROPEEN**

(45) Date de publication et mention de la délivrance du brevet:
**15.06.2022 Bulletin 2022/24**

(21) Numéro de dépôt: **17713020.0**

(22) Date de dépôt: **24.03.2017**

(51) Classification Internationale des Brevets (IPC):
***C08G 81/02*** *(2006.01)*      ***C09D 5/08*** *(2006.01)*

(52) Classification Coopérative des Brevets (CPC):
**C08G 81/028; C09D 5/08**

(86) Numéro de dépôt international:
**PCT/EP2017/057115**

(87) Numéro de publication internationale:
**WO 2017/162871 (28.09.2017 Gazette 2017/39)**

(54) **COPOLYMÈRE À BLOCS POUR LA PROTECTION DE PIÈCES À BASE DE MÉTAUX**

BLOCKCOPOLYMER ZUM SCHUTZ VON TEILEN AUF METALLBASIS

BLOCK COPOLYMER FOR PROTECTING METAL-BASED PARTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **24.03.2016  FR 1652585**

(43) Date de publication de la demande:
**30.01.2019  Bulletin 2019/05**

(73) Titulaire: **Arkema France**
**92700 Colombes (FR)**

(72) Inventeurs:
• **PINEAU, Quentin**
**27000 Evreux (FR)**
• **CAPELOT, Mathieu**
**27300 Bernay (FR)**

(74) Mandataire: **Bandpay & Greuter**
**30, rue Notre-Dame des Victoires**
**75002 Paris (FR)**

(56) Documents cités:
WO-A1-97/00293      WO-A1-2012/080404
FR-A1- 2 510 121      US-A- 4 018 731
US-A- 4 567 226      US-A1- 2012 000 541

• **Jürgen Falde: "Römp Chemie Lexikon" In: "Römp Chemie Lexikon", 20 February 1995 (1995-02-20), XP055672328, pages 3559-3559,**

**EP 3 433 303 B1**

**Description**

L'invention se rapporte à un copolymère à blocs de structure spécifique comprenant au moins un bloc polyamide, au moins un bloc polyoléfine particulier et au moins un bloc alkylène spécifique, son procédé de préparation, une composition le contenant, et un procédé de mise en œuvre de la composition.

L'invention porte également sur une utilisation du copolymère ou de la composition pour conférer des propriétés anti-corrosion et/ou d'adhésion à une pièce comprenant une partie, comprenant du métal.

Dans des domaines très divers, des pièces ou structures métalliques sont exposées à des agressions externes sur une très longue période, que ce soit des pièces métalliques exposées à l'air, à la surface de l'eau ou bien sous l'eau. Par exemple, des câbles de suspension de pont sont exposés à de grandes différences de température. Les structures métalliques utilisées pour les constructions d'habitation subissent des contraintes extérieures importantes. Des coques ou hélices de bateaux sont exposées à de longues périodes dans de l'eau salée à des températures diverses. Des conduites ou pipelines utilisées dans le domaine off-shore sont, elles aussi exposées à de longues périodes dans de l'eau salée et à des pressions extrêmes.

Dans ces domaines spécifiques, les structures métalliques ont une durée de vie longue et doivent présenter une résistance à la corrosion efficace et durable.

Depuis de longues dates, il est recherché des moyens pour améliorer la résistance à la corrosion. Des voies différentes ont été exploitées pour résoudre ce problème technique. Des recherches ont été menées sur la structure des matériaux métalliques en eux-mêmes. Des traitements anti-corrosion, que le matériau a subis avant son installation ont également été développés, comme les traitements au chrome ou au phosphate. Une dernière approche consiste en l'application sur la pièce métallique d'un revêtement.

Dans le domaine de revêtement, notamment de pièces métalliques, des progrès restent encore à réaliser, car le matériau recherché doit répondre à un certain nombre de critères. Il doit parfaitement adhérer, notamment à la pièce métallique : l'adhésion doit être forte et durable.

Le revêtement doit ensuite présenter une résistance à la corrosion efficace et durable.

Enfin, selon les applications, le revêtement doit pouvoir accueillir un revêtement supplémentaire. Dans ce contexte, le revêtement recherché doit pouvoir présenter une adhésion forte et durable avec un matériau autre qu'une pièce métallique.

Des copolymères à blocs ont été développés, comme on peut notamment le voir dans les demandes de brevet WO 2012/080404 A1, WO 97/00293 A1, US 4 018 731 A, US 4 567 226 A, FR 2510121 A1, US 2012/000541 A1. Néanmoins, lesdits copolymères ne sont pas satisfaisants.

La Demanderesse a découvert que des copolymères à blocs de structure particulière résolvaient le problème technique posé.

Lesdits copolymères à blocs sont des copolymères thermoplastiques et ne sont pas des caoutchoucs. En d'autres termes, le copolymère à bloc n'est pas réticulé et ne peut donc être un caoutchouc.

Elle a pu remarquer que ces copolymères, qui conduisaient notamment à cette double performance : bonne adhésion vis-à-vis des pièces métalliques et/ou bonnes propriétés anti-corrosion, présentaient également une bonne capacité d'adhésion vis-à-vis d'autres pièces plastiques.

La présente invention a donc pour objet un copolymère à blocs comportant

- au moins un bloc polyamide,
- au moins un bloc polyoléfine étant un homopolymère ou copolymère comprenant un ou plusieurs motifs oléfines choisis parmi l'éthylene, le propylène, le butène-1, l'octène-I et le butadiène,
- au moins un bloc alkylène issu d'un diacide en $C_2$-$C_{36}$, étant une chaîne aliphatique, linéaire, saturée;

et ledit copolymère à blocs

et présentant une viscosité à l'état fondu allant de 300 Pa.s à 20 000 Pa.s, en particulier de 300 à 15 000 Pa.s, mesurée à 230°C par rhéologie oscillatoire, à une fréquence de 1 Hz et 5 % de déformation selon la norme ISO 6721-10 :1999,

le copolymère étant de formule suivante:

PA-(R-Pol-R-P A)n-R-Pol-R-PA
Avec n compris entre 0 et 100, en particulier de 0 à 10, de préférence 0 ou 1,
PA désignant le bloc polyamide,
R désignant le bloc alkylène,
Pol désignant le bloc polyoléfine;

ledit copolymère à blocs comprenant une teneur en bloc polyoléfine comprise entre 2 et 98% en poids par rapport au poids total du copolymère à blocs.

L'invention porte sur un procédé de préparation d'un tel copolymère à blocs.

L'invention porte également sur une composition comportant au moins un tel copolymère à blocs.

L'invention porte sur un procédé de mise en œuvre de ladite composition.

La présente invention a également pour objet une utilisation du copolymère à blocs ou de la composition pour conférer des propriétés anti-corrosion et/ou d'adhésion à une pièce comprenant une partie, comprenant du métal, dont ladite partie est enduite par ledit copolymère.

D'autres caractéristiques, aspects, objets et avantages de la présente invention apparaîtront encore plus clairement à la lecture de la description et des exemples qui suivent.

D'autre part, tout intervalle de valeurs désigné par l'expression "entre a et b" ou "compris entre a et b" représente le domaine de valeurs allant de a à b (c'est-à-dire bornes a et b inclues), de même tout intervalle de valeurs désigné par l'expression "de a à b" signifie le domaine de valeurs allant de a jusqu'à b (c'est-à-dire incluant les bornes strictes a et b).

*Copolymère à blocs*

Le copolymère à blocs selon la présente invention comporte :

- au moins un bloc polyamide,
- au moins un bloc polyoléfine étant un homopolymère ou copolymère comprenant un ou plusieurs motifs oléfines choisis parmi l'éthylene, le propylène, le butène-1,l'octène-I et le butadiène,
- au moins un bloc alkylène issu d'un diacide en $C_2$-$C_{36}$, étant une chaîne aliphatique, linéaire, saturée;

et présentant une viscosité à l'état fondu allant de 300 Pa.s à 20 000 Pa.s, en particulier de 300 à 15 000 Pa.s, mesurée à 230°C par rhéologie oscillatoire, à une fréquence de 1 Hz et 5 % de déformation selon la norme ISO 6721-10:1999,
le copolymère étant de formule suivante:

PA-(R-Pol-R-P A)n-R-Pol-R-PA
Avec n compris entre 0 et 100, en particulier de 0 à 10, de préférence 0 ou 1, PA désignant le bloc polyamide,
R désignant le bloc alkylène,
Pol désignant le bloc polyoléfine;
ledit copolymère à blocs comprenant une teneur en bloc polyoléfine comprise entre 2 et 98% en poids par rapport au poids total du copolymère à blocs.

La structure de ces blocs est décrite ci-dessous.

*Bloc polyamide*

Les copolymères à blocs selon l'invention comportent dans leur structure au moins un bloc polyamide.

La nomenclature utilisée pour définir les polyamides est décrite dans la norme ISO 1874-1:1992 "Plastiques -- Matériaux polyamides (PA) pour moulage et extrusion -- Partie 1: Désignation", notamment en page 3 (tableaux 1 et 2) et est bien connue de l'homme du métier.

Le bloc polyamide selon la présente invention peut avoir une structure homopolyamide ou copolyamide.

Par homopolyamide, au sens de la présente invention, on entend un polyamide, qui n'est constitué que de la répétition d'une unique unité.

Par copolyamide, au sens de la présente invention, on entend un polyamide, qui est constitué de la répétition d'au moins deux unités de structure chimique différente. Ce copolyamide peut présenter une structure aléatoire, alternée ou à blocs.

Le bloc polyamide selon la présente invention peut comprendre une ou plusieurs unités de structure choisie parmi les amino-acides, les lactames et les unités (diamine).(diacide).

Lorsque le polyamide comporte un aminoacide dans sa structure, il peut être choisi parmi l'acide 9-aminononanoïque (A=9), l'acide 10-aminodécanoïque (A=10), l'acide 10-aminoundécanoïque (A=11), l'acide 12-aminododécanoïque (A=12) et l'acide 11-aminoundécanoïque (A=11) ainsi que ses dérivés, notamment l'acide N-heptyl-11-aminoundécanoïque, A désignant le nombre d'atomes de carbone dans le motif.

Lorsque le polyamide comporte un lactame, il peut être choisi parmi la pyrrolidinone, la 2-pipéridinone, le caprolactame, l'énantholactame, le caprylolactame, le pelargolactame, le décanolactame, l'undecanolactame, et le lauryllactame (A=12).

Lorsque le polyamide comporte est un motif répondant à la formule (diamine en Ca).(diacide en Cb) Ca et Cb désignant le nombre d'atomes de carbone respectivement dans la diamine et le diacide, le motif (diamine en Ca) est choisi parmi les diamines aliphatiques, linéaires ou ramifiés, les diamines cycloaliphatiques et les diamines alkylaromatiques.

Lorsque la diamine est aliphatique et linéaire, de formule $H_2N-(CH_2)_a-NH_2$, le monomère (diamine en Ca) est préférentiellement choisi parmi la butanediamine (a=4), la pentanediamine (a=5), l'hexanediamine (a=6), l'heptanediamine (a=7), l'octanediamine (a=8), la nonanediamine (a=9), la décanediamine (a=10), l'undécanediamine (a=11), la dodécanediamine (a=12), la tridécanediamine (a=13), la tetradécanediamine (a=14), l'hexadécanediamine (a=16), l'octadécanediamine (a=18), l'eicosanediamine (a=20), la docosanediamine (a=22) et les diamines obtenues à partir d'acides gras.

Lorsque la diamine est aliphatique, linéaire et insaturée, le monomère (diamine en Ca) est préférentiellement l'octadécènediamine (a=18).

Lorsque la diamine est aliphatique et ramifiée, elle peut comporter un ou plusieurs substituants méthyle ou éthyle sur la chaîne principale. Par exemple, le monomère (diamine en Ca) peut avantageusement être choisi parmi la 2,2,4-trimethyl-1,6-hexanediamine, la 2,4,4-trimethyl-1,6-hexanediamine, le 1,3-diaminopentane, la 2-methyl-1,5-pentanediamine, la 2-methyl-1,8-octanediamine.

Lorsque le monomère (diamine en Ca) est cycloaliphatique, il est choisi parmi la bis(3,5-dialkyl-4-aminocyclohexyl)methane, la bis(3,5-dialkyl-4-aminocyclohexyl)ethane, la bis(3,5-dialkyl-4-aminocyclo-hexyl)propane, la bis(3,5-dialkyl-4-aminocyclohexyl)butane, la bis-(3-méthyl-4-aminocyclohexyl)-méthane (BMACM ou MACM), la p-bis(aminocyclohexyl)-methane (PACM) et l'isopropylidenedi(cyclohexylamine) (PACP), l'isophoronediamine (a=10), la pipérazine (a=4), l'amino-éthylpipérazine. Il peut également comporter les squelettes carbonés suivants : norbornyl méthane, cyclohexylméthane, dicyclohexylpropane, di(méthylcyclohexyl), di(methylcyclohexyl) propane. Une liste non-exhaustive de ces diamines cycloaliphatiques est donnée dans la publication "Cycloaliphatic Amines" (Encyclopaedia of Chemical Technology, Kirk-Othmer, 4th Edition (1992), pp. 386-405).

Lorsque le monomère (diamine en Ca) est alkylaromatique, il est choisi parmi la 1,3-xylylène diamine et la 1,4-xylylène diamine.

Le motif (diacide en Cb) est choisi parmi les diacides aliphatiques, linéaires ou ramifiés, les diacides cycloaliphatiques et les diacides aromatiques.

Lorsque le monomère (diacide en Cb) est aliphatique et linéaire, il est choisi parmi l'acide succinique (b=4), l'acide pentanedioïque (b=5), l'acide adipique (b=6), l'acide heptanedioïque (b=7), l'acide octanedioïque (b=8), l'acide azélaïque (b=9), l'acide sébacique (b=10), l'acide undécanedioïque (b=11), l'acide dodécanedioïque (b=12), l'acide brassylique (b=13), l'acide tetradécanedioïque (b=14), l'acide hexadécanedioïque (b=16), l'acide octadécanedioïque (b=18), l'acide octadécènedioïque (b=18), l'acide eicosanedioïque (b=20), l'acide docosanedioïque (b=22) et les dimères d'acides gras contenant 36 carbones.

Les dimères d'acides gras mentionnés ci-dessus sont des acides gras dimérisés obtenus par oligomérisation ou polymérisation d'acides gras monobasiques insaturés à longue chaîne hydrocarbonée (tels que l'acide linoléïque et l'acide oléïque), comme décrit notamment dans le document EP 0 471 566.

Lorsque le diacide est cycloaliphatique, il peut comporter les squelettes carbonés suivants : norbornyl méthane, cyclohexylméthane, dicyclohexylméthane, dicyclohexylpropane, di(méthylcyclohexyl), di(methylcyclohexyl)propane.

Lorsque le diacide est aromatique, il est choisi parmi l'acide téréphtalique (noté T), isophtalique (noté I) et les diacides naphtaléniques.

De préférence, le bloc polyamide est aliphatique.

Plus particulièrement, le bloc polyamide comprend au moins un motif choisi parmi PA 6, PA 11, PA12, PA 6.10, PA 6.6, PA 6.12, PA 10.10, PA 10.12.

Encore plus particulièrement, le bloc polyamide comprend au moins un motif possédant un nombre d'atomes de carbone sur atome d'azote supérieur ou égal à 8, et plus particulièrement comprend au moins un motif choisi parmi PA 11, PA12, PA 6.10, PA 6.12, PA 10.10, PA 10.12.

De préférence, le bloc polyamide est choisi parmi les blocs homopolyamide : PA 11, PA12, PA 6.10, PA 6.12, PA 10.10, PA 10.12.

De préférence, le ou les blocs polyamide présentent chacun une masse moléculaire en nombre mesurée par potentiométrie comprise entre 4 000 et 20 000.

De préférence, le copolymère à blocs selon l'invention comporte une teneur en bloc polyamide comprise entre 2 et 98%, de préférence entre 30 et 95%, de manière plus préférée entre 50 et 94% en poids par rapport au poids total du copolymère à blocs.

*Terminaisons de chaîne*

Le ou les blocs polyamides peuvent se terminer par des fonctions amine ou acide, ou peuvent être fonctionnalisés de manière à se terminer par des fonctions isocyanate et anhydride, et de préférence se terminent par des fonctions amine.

*Bloc polyoléfine*

Les copolymères à blocs selon l'invention comportent dans leur structure au moins un bloc polyoléfine.

On entend par polyoléfine, un homopolymère ou copolymère comprenant un ou plusieurs motifs oléfines choisis parmi l'éthylene, le propylène, le butène-1, l'octène-1 et le butadiène. A titre d'exemple de polyoléfine, on peut citer le polyéthylène et, notamment, le polyéthylène basse densité (LDPE), le polyéthylène haute densité (HDPE), le polyéthylène à basse densité linéaire (LLDPE) et le polyéthylène très basse densité (VLDPE) ; le polypropylène ; les copolymères éthylène/propylène ; les polyoléfines élastomères comme l'éthylène-propylène (EPR ou EPM) ou l'éthylène-propylène-diène monomère (EPDM) ; ou encore les polyéthylènes métallocènes obtenus par catalyse monosite.

Selon la présente invention le bloc polyoléfine est un homopolymère ou copolymère comprenant un ou plusieurs motifs oléfines choisis parmi l'éthylene, le propylène, le butène-1, l'octène-1 et le butadiène.

De préférence, le bloc polyoléfine est du polybutadiène.

Il peut comporter des séquences 1,4 cis, 1,4 trans ou 1,2 ou un mélange de celles-ci. De préférence, le polybutadiène comporte majoritairement des séquences en 1,2.

Le copolymère à blocs comprend une teneur en bloc polyoléfine comprise entre 2 et 98%, de préférence entre 5 et 70, de manière plus préférée entre 6 et 50%, préférentiellement entre 8 et 30, et de manière encore plus préférée entre 9 et 25 % en poids par rapport au poids total du copolymère à blocs.

*Terminaisons de chaîne*

Le ou les blocs polypolyoléfine peuvent être fonctionnalisés de manière à se terminer par des fonctions choisies parmi les amine, acide, alcool, isocyanate et anhydride.

De manière encore préférée, le bloc polyoléfine est un bloc polybutadiène, terminé par des fonctions alcools.

Le produit de dénomination commerciale Krasol® ou Poly Bd® commercialisé par la société Cray Valley peut être utilisé.

*Propriétés physico-chimiques du bloc polyoléfine*

Le bloc polyoléfine peut présenter une viscosité inférieure à 60 000 cps, de préférence inférieure à 40 000 cps, et de préférence inférieure à 20 000 cps et de façon encore préférentielle entre 1 000 et 20 000 cps, la viscosité étant mesurée à 25°C avec un appareil de Brookfield et selon la méthode Brookfield.

Avantageusement, le bloc polyoléfine a une masse moléculaire en nombre comprise entre 1 000 et 10 000, en particulier entre 1 000 et 4 000.

*Liaisons intermédiaires entre les blocs*

Le ou les blocs polyamides et polyoléfines peuvent se terminer par des fonctions choisies parmi les amine, acide, isocyanate, alcool et anhydride. Le ou les blocs polyoléfines et polyamides peuvent être modifiés de manière à se terminer par ces fonctions.

Par conséquent, les liaisons entre les blocs peuvent être des fonctions ester, amide, urée et/ou uréthane.

De préférence, les blocs polyoléfines et polyamides ne comportent pas de greffage latéral. Par greffage latéral, on entend un greffage, qui n'est pas situé aux extrémités du bloc, mais qui est situé sur la chaîne principale et qui crée ainsi une ramification ou une substitution de la chaîne principale.

De préférence, le copolymère selon l'invention est linéaire.

*Bloc alkylène*

Les copolymères à blocs selon l'invention comportent dans leur structure au moins un bloc alkylène issu d'un diacide en $C_2$-$C_{36}$, étant une chaîne aliphatique, linéaire, saturée.

De préférence, le bloc alkylène est issu d'un diacide en $C_8$-$C_{36}$, en particulier de $C_{10}$-$C_{36}$. En d'autres termes, il est obtenu suite à la condensation d'un monomère diacide en $C_2$-$C_{36}$, plus préférentiellement en $C_8$-$C_{36}$, en particulier de $C_{10}$-$C_{36}$ avec les autres blocs.

De manière encore plus préférée, le copolymère à blocs selon l'invention comporte au moins un bloc alkylène comportant entre 8 et 36 atomes de carbones, en particulier de $C_{10}$-$C_{36}$. Plus particulièrement, le bloc alkylène est un diacide gras.

Plus particulièrement, le bloc alkylène est un dimère d'acide gras ou encore un acide gras dimérisé, de préférence un diacide en $C_8$-$C_{36}$.

Le produit de dénomination commerciale Pripol® commercialisé par la société Croda peut être utilisé.

Le produit de dénomination commerciale Empol® commercialisé par la société Cognis peut être utilisé.

Le produit de dénomination commerciale Unydime® commercialisé par la société Arizona Chemical peut être utilisé.

Le produit de dénomination commerciale Radiacid® commercialisé par la société Oleon peut être utilisé.

*Agencement du copolymère*

Le copolymère à blocs selon l'invention est de formule suivante :

PA-(R-Pol-R-PA)n-R-Pol-R-P A

Avec n compris entre 0 et 100, en particulier de 0 à 10, de préférence 0 ou 1,
PA, R et Pol étant tels que définis ci-dessus.

*Teneur des blocs*

De préférence, le copolymère à blocs selon l'invention comporte une teneur en bloc alkylène comprise entre 0,1 et 25%, de préférence entre 1 et 15% en poids par rapport au poids total du copolymère à blocs.

Avantageusement, le copolymère à blocs selon l'invention comporte une teneur en bloc alkylène comprise entre 0,1 et 25%, une teneur en bloc polyamide comprise entre 2 et 98%, une teneur en bloc polyoléfine comprise entre 2 et 98%, en poids par rapport au poids total du copolymère à blocs, la somme étant égale à 100%.

Avantageusement, le copolymère à blocs selon l'invention comporte une teneur en bloc alkylène comprise entre 0,1 et 25%, une teneur en bloc polyamide comprise entre 2 et 98%, une teneur en bloc polyoléfine comprise entre 5 et 70%, en poids par rapport au poids total du copolymère à blocs, la somme étant égale à 100%.

Avantageusement, le copolymère à blocs selon l'invention comporte une teneur en bloc alkylène comprise entre 0,1 et 25%, une teneur en bloc polyamide comprise entre 2 et 98%, une teneur en bloc polyoléfine comprise entre 6 et 50%, en poids par rapport au poids total du copolymère à blocs, la somme étant égale à 100%.

Avantageusement, le copolymère à blocs selon l'invention comporte une teneur en bloc alkylène comprise entre 0,1 et 25%, une teneur en bloc polyamide comprise entre 2 et 98%, une teneur en bloc polyoléfine comprise entre 8 et 30%, en poids par rapport au poids total du copolymère à blocs, la somme étant égale à 100%.

Avantageusement, le copolymère à blocs selon l'invention comporte une teneur en bloc alkylène comprise entre 0,1 et 25%, une teneur en bloc polyamide comprise entre 2 et 98%, une teneur en bloc polyoléfine comprise entre 10 et 25%, en poids par rapport au poids total du copolymère à blocs, la somme étant égale à 100%.

Avantageusement, le copolymère à blocs selon l'invention comporte une teneur en bloc alkylène comprise entre 0,1 et 25%, une teneur en bloc polyamide comprise entre 30 et 95%, une teneur en bloc polyoléfine comprise entre 2 et 98%, en poids par rapport au poids total du copolymère à blocs, la somme étant égale à 100%.

Avantageusement, le copolymère à blocs selon l'invention comporte une teneur en bloc alkylène comprise entre 0,1 et 25%, une teneur en bloc polyamide comprise entre 30 et 95%, une teneur en bloc polyoléfine comprise entre 5 et 70%, en poids par rapport au poids total du copolymère à blocs, la somme étant égale à 100%.

Avantageusement, le copolymère à blocs selon l'invention comporte une teneur en bloc alkylène comprise entre 0,1 et 25%, une teneur en bloc polyamide comprise entre 30 et 95%, une teneur en bloc polyoléfine comprise entre 6 et 50%, en poids par rapport au poids total du copolymère à blocs, la somme étant égale à 100%.

Avantageusement, le copolymère à blocs selon l'invention comporte une teneur en bloc alkylène comprise entre 0,1 et 25%, une teneur en bloc polyamide comprise entre 30 et 95%, une teneur en bloc polyoléfine comprise entre 8 et 30%, en poids par rapport au poids total du copolymère à blocs, la somme étant égale à 100%.

Avantageusement, le copolymère à blocs selon l'invention comporte une teneur en bloc alkylène comprise entre 0,1 et 25%, une teneur en bloc polyamide comprise entre 30 et 95%, une teneur en bloc polyoléfine comprise entre 10 et 25%, en poids par rapport au poids total du copolymère à blocs, la somme étant égale à 100%.

Avantageusement, le copolymère à blocs selon l'invention comporte une teneur en bloc alkylène comprise entre 0,1 et 25%, une teneur en bloc polyamide comprise entre 50 et 94%, une teneur en bloc polyoléfine comprise entre 2 et 98%, en poids par rapport au poids total du copolymère à blocs, la somme étant égale à 100%.

Avantageusement, le copolymère à blocs selon l'invention comporte une teneur en bloc alkylène comprise entre 0,1 et 25%, une teneur en bloc polyamide comprise entre 50 et 94%, une teneur en bloc polyoléfine comprise entre 5 et 70%, en poids par rapport au poids total du copolymère à blocs, la somme étant égale à 100%.

Avantageusement, le copolymère à blocs selon l'invention comporte une teneur en bloc alkylène comprise entre 0,1 et 25%, une teneur en bloc polyamide comprise entre 50 et 94%, une teneur en bloc polyoléfine comprise entre 6 et 50%, en poids par rapport au poids total du copolymère à blocs, la somme étant égale à 100%.

Avantageusement, le copolymère à blocs selon l'invention comporte une teneur en bloc alkylène comprise entre 0,1 et 25%, une teneur en bloc polyamide comprise entre 50 et 94%, une teneur en bloc polyoléfine comprise entre 8 et 30%, en poids par rapport au poids total du copolymère à blocs, la somme étant égale à 100%.

Avantageusement, le copolymère à blocs selon l'invention comporte une teneur en bloc alkylène comprise entre 0,1 et 25%, une teneur en bloc polyamide comprise entre 50 et 94%, une teneur en bloc polyoléfine comprise entre 10 et 25%, en poids par rapport au poids total du copolymère à blocs, la somme étant égale à 100%.

Avantageusement, le copolymère à blocs selon l'invention comporte une teneur en bloc alkylène comprise entre 0,1 et 25%, une teneur en bloc polyamide comprise entre 70 et 92%, une teneur en bloc polyoléfine comprise entre 2 et 98%, en poids par rapport au poids total du copolymère à blocs, la somme étant égale à 100%.

Avantageusement, le copolymère à blocs selon l'invention comporte une teneur en bloc alkylène comprise entre 0,1 et 25%, une teneur en bloc polyamide comprise entre 70 et 92%, une teneur en bloc polyoléfine comprise entre 5 et 70%, en poids par rapport au poids total du copolymère à blocs, la somme étant égale à 100%.

Avantageusement, le copolymère à blocs selon l'invention comporte une teneur en bloc alkylène comprise entre 0,1 et 25%, une teneur en bloc polyamide comprise entre 70 et 92%, une teneur en bloc polyoléfine comprise entre 6 et 50%, en poids par rapport au poids total du copolymère à blocs, la somme étant égale à 100%.

Avantageusement, le copolymère à blocs selon l'invention comporte une teneur en bloc alkylène comprise entre 0,1 et 25%, une teneur en bloc polyamide comprise entre 70 et 92%, une teneur en bloc polyoléfine comprise entre 8 et 30%, en poids par rapport au poids total du copolymère à blocs, la somme étant égale à 100%.

Avantageusement, le copolymère à blocs selon l'invention comporte une teneur en bloc alkylène comprise entre 0,1 et 25%, une teneur en bloc polyamide comprise entre 70 et 92%, une teneur en bloc polyoléfine comprise entre 10 et 25%, en poids par rapport au poids total du copolymère à blocs, la somme étant égale à 100%.

Avantageusement, le copolymère à blocs selon l'invention comporte une teneur en bloc alkylène comprise entre 0,1 et 25%, une teneur en bloc polyamide comprise entre 75 et 90%, une teneur en bloc polyoléfine comprise entre 2 et 98%, en poids par rapport au poids total du copolymère à blocs, la somme étant égale à 100%.

Avantageusement, le copolymère à blocs selon l'invention comporte une teneur en bloc alkylène comprise entre 0,1 et 25%, une teneur en bloc polyamide comprise entre 75 et 90%, une teneur en bloc polyoléfine comprise entre 5 et 70%, en poids par rapport au poids total du copolymère à blocs, la somme étant égale à 100%.

Avantageusement, le copolymère à blocs selon l'invention comporte une teneur en bloc alkylène comprise entre 0,1 et 25%, une teneur en bloc polyamide comprise entre 75 et 90%, une teneur en bloc polyoléfine comprise entre 6 et 50%, en poids par rapport au poids total du copolymère à blocs, la somme étant égale à 100%.

Avantageusement, le copolymère à blocs selon l'invention comporte une teneur en bloc alkylène comprise entre 0,1 et 25%, une teneur en bloc polyamide comprise entre 75 et 90%, une teneur en bloc polyoléfine comprise entre 8 et 30%, en poids par rapport au poids total du copolymère à blocs, la somme étant égale à 100%.

Avantageusement, le copolymère à blocs selon l'invention comporte une teneur en bloc alkylène comprise entre 0,1 et 25%, une teneur en bloc polyamide comprise entre 75 et 90%, une teneur en bloc polyoléfine comprise entre 10 et 25%, en poids par rapport au poids total du copolymère à blocs, la somme étant égale à 100%.

Avantageusement, le copolymère à blocs selon l'invention comporte une teneur en bloc alkylène comprise entre 1 et 15%, une teneur en bloc polyamide comprise entre 2 et 98%, une teneur en bloc polyoléfine comprise entre 2 et 98%, en poids par rapport au poids total du copolymère à blocs, la somme étant égale à 100%.

Avantageusement, le copolymère à blocs selon l'invention comporte une teneur en bloc alkylène comprise entre 1 et 15%, une teneur en bloc polyamide comprise entre 2 et 98%, une teneur en bloc polyoléfine comprise entre 5 et 70%, en poids par rapport au poids total du copolymère à blocs, la somme étant égale à 100%.

Avantageusement, le copolymère à blocs selon l'invention comporte une teneur en bloc alkylène comprise entre 1 et 15%, une teneur en bloc polyamide comprise entre 2 et 98%, une teneur en bloc polyoléfine comprise entre 6 et 50%, en poids par rapport au poids total du copolymère à blocs, la somme étant égale à 100%.

Avantageusement, le copolymère à blocs selon l'invention comporte une teneur en bloc alkylène comprise entre 1 et 15%, une teneur en bloc polyamide comprise entre 2 et 98%, une teneur en bloc polyoléfine comprise entre 8 et 30%, en poids par rapport au poids total du copolymère à blocs, la somme étant égale à 100%.

Avantageusement, le copolymère à blocs selon l'invention comporte une teneur en bloc alkylène comprise entre 1 et 15%, une teneur en bloc polyamide comprise entre 2 et 98%, une teneur en bloc polyoléfine comprise entre 10 et 25%, en poids par rapport au poids total du copolymère à blocs, la somme étant égale à 100%.

Avantageusement, le copolymère à blocs selon l'invention comporte une teneur en bloc alkylène comprise entre 1 et 15%, une teneur en bloc polyamide comprise entre 30 et 95%, une teneur en bloc polyoléfine comprise entre 2 et 98%, en poids par rapport au poids total du copolymère à blocs, la somme étant égale à 100%.

Avantageusement, le copolymère à blocs selon l'invention comporte une teneur en bloc alkylène comprise entre 1 et 15%, une teneur en bloc polyamide comprise entre 30 et 95%, une teneur en bloc polyoléfine comprise entre 5 et 70%, en poids par rapport au poids total du copolymère à blocs, la somme étant égale à 100%.

Avantageusement, le copolymère à blocs selon l'invention comporte une teneur en bloc alkylène comprise entre 1 et 15%, une teneur en bloc polyamide comprise entre 30 et 95%, une teneur en bloc polyoléfine comprise entre 6 et 50%, en poids par rapport au poids total du copolymère à blocs, la somme étant égale à 100%.

Avantageusement, le copolymère à blocs selon l'invention comporte une teneur en bloc alkylène comprise entre 1 et 15%, une teneur en bloc polyamide comprise entre 30 et 95%, une teneur en bloc polyoléfine comprise entre 8 et 30%, en poids par rapport au poids total du copolymère à blocs, la somme étant égale à 100%.

Avantageusement, le copolymère à blocs selon l'invention comporte une teneur en bloc alkylène comprise entre 1 et 15%, une teneur en bloc polyamide comprise entre 30 et 95%, une teneur en bloc polyoléfine comprise entre 10 et 25%, en poids par rapport au poids total du copolymère à blocs, la somme étant égale à 100%.

Avantageusement, le copolymère à blocs selon l'invention comporte une teneur en bloc alkylène comprise entre 1 et 15%, une teneur en bloc polyamide comprise entre 50 et 94%, une teneur en bloc polyoléfine comprise entre 2 et 98%, en poids par rapport au poids total du copolymère à blocs, la somme étant égale à 100%.

Avantageusement, le copolymère à blocs selon l'invention comporte une teneur en bloc alkylène comprise entre 1 et 15%, une teneur en bloc polyamide comprise entre 50 et 94%, une teneur en bloc polyoléfine comprise entre 5 et 70%, en poids par rapport au poids total du copolymère à blocs, la somme étant égale à 100%.

Avantageusement, le copolymère à blocs selon l'invention comporte une teneur en bloc alkylène comprise entre 1 et 15%, une teneur en bloc polyamide comprise entre 50 et 94%, une teneur en bloc polyoléfine comprise entre 6 et 50%, en poids par rapport au poids total du copolymère à blocs, la somme étant égale à 100%.

Avantageusement, le copolymère à blocs selon l'invention comporte une teneur en bloc alkylène comprise entre 1 et 15%, une teneur en bloc polyamide comprise entre 50 et 94%, une teneur en bloc polyoléfine comprise entre 8 et 30%, en poids par rapport au poids total du copolymère à blocs, la somme étant égale à 100%.

Avantageusement, le copolymère à blocs selon l'invention comporte une teneur en bloc alkylène comprise entre 1 et 15%, une teneur en bloc polyamide comprise entre 50 et 94%, une teneur en bloc polyoléfine comprise entre 10 et 25%, en poids par rapport au poids total du copolymère à blocs, la somme étant égale à 100%.

Avantageusement, le copolymère à blocs selon l'invention comporte une teneur en bloc alkylène comprise entre 1 et 15%, une teneur en bloc polyamide comprise entre 70 et 92%, une teneur en bloc polyoléfine comprise entre 2 et 98%, en poids par rapport au poids total du copolymère à blocs, la somme étant égale à 100%.

Avantageusement, le copolymère à blocs selon l'invention comporte une teneur en bloc alkylène comprise entre 1 et 15%, une teneur en bloc polyamide comprise entre 70 et 92%, une teneur en bloc polyoléfine comprise entre 5 et 70%, en poids par rapport au poids total du copolymère à blocs, la somme étant égale à 100%.

Avantageusement, le copolymère à blocs selon l'invention comporte une teneur en bloc alkylène comprise entre 1 et 15%, une teneur en bloc polyamide comprise entre 70 et 92%, une teneur en bloc polyoléfine comprise entre 6 et 50%, en poids par rapport au poids total du copolymère à blocs, la somme étant égale à 100%.

Avantageusement, le copolymère à blocs selon l'invention comporte une teneur en bloc alkylène comprise entre 1 et 15%, une teneur en bloc polyamide comprise entre 70 et 92%, une teneur en bloc polyoléfine comprise entre 8 et 30%, en poids par rapport au poids total du copolymère à blocs, la somme étant égale à 100%.

Avantageusement, le copolymère à blocs selon l'invention comporte une teneur en bloc alkylène comprise entre 1 et 15%, une teneur en bloc polyamide comprise entre 70 et 92%, une teneur en bloc polyoléfine comprise entre 10 et 25%, en poids par rapport au poids total du copolymère à blocs, la somme étant égale à 100%.

Avantageusement, le copolymère à blocs selon l'invention comporte une teneur en bloc alkylène comprise entre 1 et 15%, une teneur en bloc polyamide comprise entre 75 et 90%, une teneur en bloc polyoléfine comprise entre 2 et 98%, en poids par rapport au poids total du copolymère à blocs, la somme étant égale à 100%.

Avantageusement, le copolymère à blocs selon l'invention comporte une teneur en bloc alkylène comprise entre 1 et 15%, une teneur en bloc polyamide comprise entre 75 et 90%, une teneur en bloc polyoléfine comprise entre 5 et 70%, en poids par rapport au poids total du copolymère à blocs, la somme étant égale à 100%.

Avantageusement, le copolymère à blocs selon l'invention comporte une teneur en bloc alkylène comprise entre 1 et 15%, une teneur en bloc polyamide comprise entre 75 et 90%, une teneur en bloc polyoléfine comprise entre 6 et 50%, en poids par rapport au poids total du copolymère à blocs, la somme étant égale à 100%.

Avantageusement, le copolymère à blocs selon l'invention comporte une teneur en bloc alkylène comprise entre 1 et 15%, une teneur en bloc polyamide comprise entre 75 et 90%, une teneur en bloc polyoléfine comprise entre 8 et 30%, en poids par rapport au poids total du copolymère à blocs, la somme étant égale à 100%.

Avantageusement, le copolymère à blocs selon l'invention comporte une teneur en bloc alkylène comprise entre 1 et 15%, une teneur en bloc polyamide comprise entre 75 et 90%, une teneur en bloc polyoléfine comprise entre 10 et 25%, en poids par rapport au poids total du copolymère à blocs, la somme étant égale à 100%.

Avantageusement, dans le copolymère à blocs selon l'invention comprenant un bloc polyamide, un bloc polyoléfine et un bloc alkylène tel que défini ci-dessus, le bloc polyoléfine est un polybutadiène.

Avantageusement, dans le copolymère à blocs selon l'invention comprenant un bloc polyamide, un bloc polyoléfine et un bloc alkylène tel que défini ci-dessus, le bloc polyoléfine est un polybutadiène terminé par des fonctions alcools.

Avantageusement, dans le copolymère à blocs selon l'invention comprenant un bloc polyamide, un bloc polyoléfine et un bloc alkylène tel que défini ci-dessus, le bloc polyoléfine est un polybutadiène et le bloc alkylène est un diacide en $C_8$-$C_{36}$, en particulier de $C_{10}$-$C_{36}$.

Avantageusement, dans le copolymère à blocs selon l'invention comprenant un bloc polyamide, un bloc polyoléfine et un bloc alkylène tel que défini ci-dessus, le bloc polyoléfine est un polybutadiène et le bloc alkylène est un diacide gras.

Avantageusement, dans le copolymère à blocs selon l'invention comprenant un bloc polyamide, un bloc polyoléfine et un bloc alkylène tel que défini ci-dessus, le bloc polyoléfine est un polybutadiène et le bloc alkylène est un dimère d'acide gras.

Avantageusement, dans le copolymère à blocs selon l'invention comprenant un bloc polyamide, un bloc polyoléfine et un bloc alkylène tel que défini ci-dessus, le bloc polyoléfine est un polybutadiène terminé par des fonctions alcools et le bloc alkylène est un diacide en $C_8$-$C_{36}$, en particulier de $C_{10}$-$C_{36}$.

Avantageusement, dans le copolymère à blocs selon l'invention comprenant un bloc polyamide, un bloc polyoléfine et un bloc alkylène tel que défini ci-dessus, le bloc polyoléfine est un polybutadiène terminé par des fonctions alcools et le bloc alkylène est un diacide gras.

Avantageusement, dans le copolymère à blocs selon l'invention comprenant un bloc polyamide, un bloc polyoléfine et un bloc alkylène tel que défini ci-dessus, le bloc polyoléfine est un polybutadiène terminé par des fonctions alcools et le bloc alkylène est un dimère d'acide gras.

*Viscosité*

Le copolymère à blocs selon l'invention présente une viscosité à l'état fondu allant de 300 Pa.s, à 20 000 Pa.s, en particulier de 300 à 15 000 Pa.s, de préférence allant de 500 à 10 000 Pa.s, et plus particumièrement de 500 à 5 000 Pa.s mesurée à 230°C par rhéologie oscillatoire à une fréquence de 1 Hz, 5% de déformation, selon la norme ISO 6721-10 :1999. La méthode de mesure suivie pour effectuer cette mesure est la suivante :
Plan plan : 30 mn à 230°C, 5% de déformation selon les conditions opératoires suivantes :

Appareil : PHYSICA MCR301
Géométrie : plans parallèles de 25mm de diamètre
Températures : 230°C
Fréquence : 100 à 0.01Hz
Durée : 10minutes
Atmosphère : Balayage d'azote.

*Bloc allongeur de chaîne*

Le copolymère à blocs selon l'invention peut comprendre éventuellement au moins un bloc allongeur de chaîne.
Ce bloc allongeur de chaîne est de structure :

Y1-A'-Y1

avec A' étant un biradical hydrocarboné de structure non polymérique (ni polymère, ni oligomère, ni prépolymère), porteur de 2 fonctions réactives terminales Y1 identiques (tel que défini dans la formule ci-dessus) , réactives par polyaddition (sans élimination de sous-produit de réaction), avec au moins une fonction en fin de chaîne du copolymère à bloc selon l'invention, de préférence de masse moléculaire en nombre inférieure à 500 et plus préférentiellement inférieure à 400,
en particulier la fonction réactive Y1 est choisie parmi: oxazine, oxazoline, oxazolinone, oxazinone, imidazoline, époxy, isocyanate, maléimide, anhydride cyclique.

Comme exemples convenables d'allongeurs de chaîne, on peut citer les suivants :

- lorsque les terminaisons de chaîne sont des fonctions NH2 ou OH, de préférence NH2, l'allongeur de chaîne Y1-A'-Y1 correspond à :

  Y1 choisi parmi les groupements : maléimide, isocyanate éventuellement bloqué, oxazinone et oxazolinone, anhydride cyclique, de préférence oxazinone, anhydride et oxazolinone et
  A' est un espaceur ou radical carboné portant les fonctions ou groupements réactifs YI, choisi parmi :

  - une liaison covalente entre deux fonctions (groupements) Y1 dans le cas où Y1 = oxazinone et oxazolinone ou
  - une chaîne hydrocarbonée aliphatique ou une chaîne hydrocarbonée aromatique et/ou cycloaliphatique, ces deux dernières comprenant au moins un cycle de 5 ou 6 atomes de carbone éventuellement substitué, avec éventuellement ladite chaîne hydrocarbonée aliphatique ayant éventuellement un poids moléculaire en nombre de 14 à 200 g.mol-1,

  L'allongeur de chaîne Y1-A'-Y1 peut également correspondre à une structure dans laquelle
  Y1 est un groupement caprolactame et

  A' est un radical carbonyle tel que le carbonyl biscaprolactame ou à A' pouvant être un téréphtaloyle ou un isophtaloyle,
  L'allongeur de chaîne Y1-A'-Y1 peut également porter un groupement Y1 d'anhydride cyclique et de préférence cet allongeur est choisi parmi un dianhydride carboxylique cycloaliphatique et/ou aromatique et plus préférentiellement il est choisi parmi : le dianhydride éthylènetétracarboxylique, le dianhydride pyromellitique, le dianhydride 3,3',4,4'-biphényltétracarboxylique, le dianhydride 1,4,5,8-naphtalènetétracarboxylique, le dianhydride perylènetétracarboxylique, le dianhydride 3,3',4,4'-benzophénone tétracarboxylique, le dianhydride 1,2,3,4-cyclobutanetétracarboxylique, le dianhydride hexafluoroisopropylidène bisphtalique, le dianhydride 9,9-bis(trifluorométhyl)xanthène tétracarboxylique, le dianhydride 3,3',4,4'-diphénylsulfonetétracarboxylique, le dianhydride bicyclo[2.2.2]oct-7-ène-2,3,5,6-tétracarboxylique, le dianhydride 1,2,3,4-cyclopentanetétracarboxylique, le dianhydride 3,3',4,4'-diphényl éther tétracarboxylique ou leurs mélanges
  et

- lorsque les terminaisons de chaîne sont des fonctions COOH ledit allongeur de chaîne Y1-A'-Y1 correspond à :

  Y1 choisi parmi les groupements : oxazoline, oxazine, imidazoline, aziridine, comme le 1, l'-iso- ou téré- phtaloyl-bis (2-methyl aziridine) ou epoxy,
  A' étant un espaceur ou un radical carboné tel que défini ci-dessus.

Plus particulièrement, quand dans ledit allongeur Y1-A'-Y1, ladite fonction Y1 est choisie parmi oxazinone, oxazolinone, oxazine, oxazoline ou imidazoline, en particulier oxazoline, dans ce cas, dans l'allongeur de chaîne représenté par Y1-A'-Y1, A' peut représenter un alkylène tel que -(CH2)m- avec m allant de 1 à 14 et de préférence de 2 à 10 ou A' peut représenter un cycloalkylène et/ou un arylène substitué (alkyle) ou non substitué, comme les arylènes benzéniques, tels que les phénylènes o-, m-, -p ou les arylènes naphtaléniques et de préférence A' est un arylène et/ou un cycloalkylène.

Dans le cas où Y1 est un époxy, l'allongeur de chaîne peut être choisi parmi les bisphenol A diglycidyl éther (DGEBA), et son dérivé hydrogéné (cycloaliphatique) bisphenol F diglycidyl éther, le tétrabromo bisphénol A diglycidyl éther, ou les hydroquinone diglycidyl éther, éthylène glycol diglycidyl éther, propylène glycol diglycidyl éther, butylène glycol diglycidyl éther, néopentyl glycol diglycidyl éther, 1,4-butanediol diglycidyl éther, 1,6-hexanediol diglycidyl éther, cyclohexanediméthanol diglycidyl éther, polyéthylène glycol diglycidyl éther de Mn <500, polypropylène glycol diglycidyl éther de Mn <500, polytétraméthylène glycol diglycidyl éther de Mn <500, résorcinol diglycidyl éther, néopentylglycol diglycidyl éther, bisphenol A polyéthylène glycol diglycidyl éther de Mn <500, bisphénol A polypropylèneglycol diglycidyl éther de Mn <500, diglycidyl esters de diacide carboxylique tel que le glycidyl ester d'acide téréphtalique ou les dioléfines (diènes) époxydées ou acides gras à double insaturation éthylénique époxydée, le diglycidyl 1,2-Cyclohexanedicarboxylate, et leurs mélanges.

Dans le cas du carbonyl- ou térephtaloyl- ou isophtaloyl-biscaprolactame comme allongeur de chaîne Y1-A'-Y1, les conditions préférées évitent l'élimination de sous-produit, comme le caprolactame lors de ladite polymérisation et mise en œuvre à l'état fondu.

Dans le cas éventuel cité ci-haut où Y1 représente une fonction isocyanate bloqué, ce blocage peut être obtenu par des agents bloquants de la fonction isocyanate, comme la epsilon-caprolactame, la méthyl éthyl kétoxime, la diméthyl pyrazole, le di éthyl malonate.

De même, dans le cas où l'allongeur est un dianhydride réagissant avec des fonctions NH2 issues du copolymère à blocs, les conditions préférées évitent toute formation de cycle imide lors de la polymérisation et lors la mise en œuvre à l'état fondu.

Pour les terminaisons OH ou NH2 du copolymère à bloc, le groupement Y1 est choisi de préférence parmi : anhydride, isocyanate (non bloqué), oxazinone et oxazolinone, plus préférentiellement oxazinone et oxazolinone, avec comme espaceur (radical) A' étant comme défini ci-haut.

Comme exemples d'allongeurs de chaîne portant des fonctions réactives Y oxazoline ou oxazine convenables à la mise en œuvre de l'invention, on pourra se référer à ceux décrits sous références « A », « B », « C » et « D » à la page 7 de la demande EP 0 581 642, ainsi qu'à leurs procédés de préparation et leurs modes de réaction qui y sont exposés. « A » dans ce document est la bisoxazoline, « B » la bisoxazine, « C » la 1,3 phénylène bisoxazoline et « D » la 1,4-phénylène bisoxazoline.

A titre d'exemple, dans le cas où les terminaisons CO2H du copolymère à blocs et l'allongeur de chaîne Y1-A'-Y1 est la 1,4-phénylène bisoxazoline, le produit de réaction obtenu possède au moins un motif récurrent de structure suivante :

$$\text{-O-C(O)-PA-C(O)-O-R1-NH-C(O)-A'-C(O)-NH-R1-}$$

dans laquelle :

PA est un polyamide à terminaisons acides HO-C(O)-PA-C(O)-OH tel que défini ci-dessus,
R1 $(CH_2)_2$, et
A' est un phényle.

Comme exemples d'allongeurs de chaîne à fonction réactive Y1 imidazoline convenables à la mise en œuvre de l'invention, on pourra se référer à ceux décrits (« A » à « F ») à la page 7 à 8 et tableau 1 de la page 10 dans la demande EP 0 739 924 ainsi qu'à leurs procédés de préparation et leurs modes de réaction qui y sont exposés.

Comme exemples d'allongeurs de chaîne à fonction réactive Y1 = oxazinone ou oxazolinone qui conviennent à la mise en œuvre de l'invention, on peut se référer à ceux décrits sous références « A » à « D » à la page 7 à 8 de la demande EP 0 581 641, ainsi qu'à leurs procédés de préparation et leurs modes de réaction qui y sont exposés.

Comme exemples de groupements Y1 oxazinones (cycle à 6 atomes) et oxazolinones (cycle à 5 atomes) convenables, on peut citer les groupements Y1 dérivés de : benzoxazinone d'oxazinone ou d'oxazolinone, avec comme espaceur A' pouvant être une simple liaison covalente avec pour allongeurs correspondants respectifs étant : bis-(benzoxazinone), bisoxazinone et bisoxazolinone.

A' peut être également un alkylène en C1 à C14, de préférence en C2 à C10 mais de préférence A' est un arylène et plus particulièrement il peut être un phénylène (substitué par Y1 en positions 1,2 ou 1,3 ou 1,4) ou un radical naphtalène (disubstitué par Yl) ou un phtaloyle (iso- ou téréphtaloyle) ou A' peut être un cycloalkylène.

Pour les fonctions Y1 comme oxazine (cycle à 6), oxazoline (cycle à 5) et imidazoline (cycle à 5), le radical A' peut être comme décrit ci-haut avec A' pouvant être une simple liaison covalente et avec les allongeurs correspondants respectifs étant : bisoxazine, bisoxazoline et bisimidazoline. A' peut être également un alkylène en C1 à C14, de préférence en C2 à C10. Le radical A' est de préférence un arylène et, plus particulièrement, il peut être un phénylène (substitué par Y1 en positions 1,2 ou 1,3 ou 1,4) ou un radical naphtalène (disubstitué par Yl) ou un phtaloyle (iso- ou téréphtaloyle) ou A' peut être un cycloalkylène.

Dans le cas où Y1 = aziridine (hétérocycle azoté à 3 atomes équivalent à l'oxyde d'éthylène en remplaçant l'éther -O- par -NH-), le radical A' peut être un phtaloyle (1,1'iso- ou téré- phtaloyle) avec comme exemple d'allongeur de ce type, la 1, l' isophtaloyl-bis(2-méthyl aziridine).

La présence d'un catalyseur de la réaction entre le copolymère à bloc et ledit allongeur Y1-A'-Y1 à un taux allant de 0,001 à 2%, de préférence de 0,01 à 0,5% par rapport au poids total de deux co-réactants cités peut accélérer la réaction de (poly)addition et ainsi raccourcir le cycle de production. Un tel catalyseur peut être choisi parmi : 4,4' diméthyl aminopyridine, l'acide p-toluène sulfonique, acide phosphorique, NaOH et éventuellement ceux décrits pour une polycondensation ou transestérification comme décrits dans EP 0 425 341, page 9, lignes 1 à 7.

Selon un cas plus particulier du choix dudit allongeur, A' peut représenter un alkylène, tel que $-(CH_2)_m-$ avec m allant de 1 à 14 et de préférence de 2 à 10 ou représente un arylène substitué alkyle ou non substitué, comme les arylènes benzéniques (comme les phénylènes o-, m-, -p) ou naphtaléniques (avec arylènes : naphtalenylènes). De préférence, A' représente un arylène qui peut être benzénique ou naphténique substitué ou non.

De préférence, l'allongeur de chaîne est le dianhydride 3,3',4,4'-benzophénone tétracarboxylique. Plus particulièrement, le copolymère à blocs se termine par des extrémités amine et le dianhydride 3,3',4,4'-benzophénone tétracarboxylique, utilisé en tant qu'allongeur de chaine réagit avec ces extrémités amine.

Comme déjà précisé, ledit allongeur de chaîne a une structure non polymérique et de préférence une masse moléculaire en nombre inférieure à 500, plus préférentiellement inférieure à 400.

De préférence, le copolymère à blocs selon l'invention comporte au moins un bloc allongeur de chaîne situé à une ou plusieurs extrémités polyamide du copolymère.

Selon un premier mode de réalisation, le copolymère à blocs est de formule suivante :

(Y1-A'-Ya)-(copo blocs)-[(Ya-A'-Ya)-(copo blocs)]m-(Ya-A' Yl)

Dans laquelle

- copo blocs désigne le copolymère à blocs tel que défini ci-dessus,
- Ya-A'-Ya désigne un allongeur de chaine Y1-A'-Y1 tel que défini ci-dessus pour lequel les fonctions réactives Y1 ont réagi avec les extrémités du copolymère à blocs conduisant à des fonctions Ya,
- (Y1-A'-Ya) et -(Ya-A' Yl) désignent des allongeurs de chaine dans lequel une seule fonction réactive a réagi,
- m est un entier entre 0 et 100.

Selon un second mode de réalisation, le copolymère à blocs est de formule suivante :

X-(copo blocs)-(Ya-A'-Ya)-[(copo blocs)-(Ya-A'-Ya)]m-(copo blocs)-X

Dans laquelle

- X désigne la fonction libre du copolymère à blocs,
- les autres éléments ayant les mêmes significations que pour le mode de réalisation précédemment décrit.

Le type de structure de copolymère obtenu dépendra du nombre d'équivalents d'allongeur de chaine introduit dans le milieu réactionnel lors de la préparation dudit allongeur de chaine.

Le taux dedit allongeur dans le dit copolymère à blocs varie de 1 à 20%, en particulier de 5 à 20% en poids par rapport au poids total du copolymère à blocs.

Avantageusement, le copolymère à blocs selon l'invention comprend (ou est constitué de)

- au moins un bloc polyamide, dont la teneur en bloc(s) polyamide est comprise entre 2 et 98% en poids par rapport au poids total du copolymère à blocs,
- au moins un bloc polyoléfine, dont la teneur en bloc(s) polyoléfine est comprise entre 2 et 98% en poids par rapport au poids total du copolymère à blocs,
- au moins un bloc alkylène, dont la teneur en bloc(s) alkylène est comprise entre 1 et 15% en poids par rapport au poids total du copolymère à blocs, et
- au moins un bloc allongeur de chaîne, dont la teneur en bloc(s) dudit allongeur de 1 à 20% par rapport au poids total du copolymère à blocs, le total étant égal à 100%.

Avantageusement, dans ce dernier copolymère à blocs selon l'invention, ledit allongeur comporte des fonctions réactives Yl, choisies parmi les anhydride, isocyanate (non bloqué), oxazinone et oxazolinone, plus préférentiellement anhydride, oxazinone et oxazolinone, l'espaceur ou le radical A' étant comme défini ci-haut.

Avantageusement, dans le copolymère à bloc selon l'invention comprenant (ou constitué de) un bloc polyamide, un bloc alkylène et un bloc polyoléfine tel que défini ci-dessus, le taux dedit allongeur de 5 à 20% par rapport au poids total du copolymère à blocs, le total étant égal à 100%.

Avantageusement, dans ce dernier copolymère à blocs selon l'invention, ledit allongeur comporte des fonctions réactives Yl, choisies parmi les anhydride, isocyanate (non bloqué), oxazinone et oxazolinone, plus préférentiellement anhydride, oxazinone et oxazolinone, l'espaceur ou le radical A' étant comme défini ci-haut.

*Masse moléculaire*

Le copolymère à blocs peut présenter une masse moléculaire en nombre mesurée par potentiométrie comprise entre 5 000 et 50 000, de préférence entre 7 000 et 40 000 g/mol.

La masse moléculaire en nombre est calculée selon la formule suivante : $Mn = 2/([COOH]+[NH2])$ en g/mol

Avec les concentrations en fins de chaine acide $[COOH]$ et amine $[NH2]$ en eq/g.

Le dosage potentiométrique des fins de chaine acide se fait par l'hydroxyde de tétra-n-butylammonium dans l'alcool benzylique 0.02N.

Le dosage potentiométrique des fins de chaine amine se fait par l'acide perchlorique 0.02N dans le m-crésol.

Selon un premier mode de réalisation de l'invention, lorsque le copolymère à blocs comporte un allongeur de chaine, alors le ou les blocs polyamide présentent chacun une masse moléculaire en nombre mesurée par potentiométrie comprise entre 4 000 et 15 000.

Selon un second mode de réalisation de l'invention, lorsque le copolymère à blocs ne comporte pas d'allongeur de chaine, alors le ou les blocs polyamide présentent chacun une masse moléculaire en nombre mesurée par potentiométrie comprise entre 6 000 et 15 000.

Le copolymère à blocs selon l'invention est un copolymère thermoplastique et n'est pas un caoutchouc.

Selon un mode de réalisation préféré de l'invention, le copolymère à blocs comprend :

- au moins un bloc polyamide, à terminaison amine, dont la teneur en bloc(s) polyamide est de 70 à 92% par rapport au poids total du copolymère à blocs ;
- au moins un bloc polyoléfine, qui est du polybutadiène, dont la teneur en bloc(s) polyoléfine est de 10 à 25% par rapport au poids total du copolymère à blocs ;
- au moins un bloc alkylène, qui est un diacide en $C_8$-$C_{36}$, dont la teneur en bloc(s) alkylène est de 1 à 15% par rapport au poids total du copolymère à blocs ; et
  présentant une viscosité à l'état fondu allant de 300 Pa.s à 20 000 Pa.s, en particulier de 300 à 15 000 Pa.s, mesurée à 230°C par rhéologie oscillatoire.

Selon un second mode de réalisation préféré de l'invention, le copolymère à blocs comprend

- au moins un bloc polyamide, à terminaison amine, dont la teneur en bloc(s) polyamide est de 70 à 92% par rapport au poids total du copolymère à blocs ;
- au moins un bloc polyoléfine, qui est du polybutadiène, dont la teneur en bloc(s) polyoléfine est de 10 à 25% par rapport au poids total du copolymère à blocs ;
- au moins un bloc alkylène, qui est un diacide en $C_8$-$C_{36}$, dont la teneur en bloc(s) alkylène est de 1 à 15% par rapport au poids total du copolymère à blocs ; et
- au moins un bloc allongeur de chaîne en une teneur de 1 à 20% par rapport au poids total du copolymère à blocs, présentant une viscosité à l'état fondu allant de 300 Pa.s à 20 000 Pa.s, en particulier de 300 à 15 000 Pa.s, mesurée à 230°C par rhéologie oscillatoire.

### Procédé de préparation du copolymère à blocs

L'invention porte également sur un procédé de préparation du copolymère à blocs selon l'invention.

Le procédé de préparation du copolymère selon l'invention comprend une étape de mélange des différents blocs.

De préférence, le procédé comprend les étapes successives suivantes :

- une étape de mélange des blocs polyoléfine et alkylène, le rapport molaire entre des blocs polyoléfine et les blocs alkylène étant supérieur ou égal à ½, puis
- une étape de mélange du ou des blocs polyamide avec le mélange obtenu à l'étape précédente.

Le procédé de préparation peut comprendre une étape supplémentaire de mélange de blocs allongeur de chaine tel que défini ci-dessus avec le mélange obtenu à l'étape précédente.

### Composition

L'invention porte également sur une composition comportant le copolymère à blocs selon l'invention.

De préférence, la composition se trouve sous forme de poudre ou de granulés.

### Les additifs

La composition selon l'invention peut également comprendre en outre au moins un additif.

Cet additif peut notamment être choisi parmi les adjuvants aidant à la transformation (ou processing aids), les charges, les stabilisants thermiques, comme les stabilisants thermiques organiques à base de phosphite, les stabilisants thermiques à base de cuivre, les colorants, les agents de démoulage, les agents d'ignifugation, les agents tensio-actifs, les azurants optiques, les anti-oxydants, tels que ceux à base de phénol ou le produit commercialisé sous la dénomination Naugard 445® commercialisé par la société CHEMTURA, les anti-UV tels que les HALS et leurs mélanges. De préférence, les colorants sont présents en une proportion de 0 à 1,5%, notamment de 0,5 à 1% en poids par rapport au poids total de la composition. De préférence, les stabilisants thermiques sont présents en une proportion de 0 à 2%, notamment de 0,5 à 1% en poids par rapport au poids total de la composition et les antioxydants sont présents en proportion de 0 à 2%, notamment de 0,5 à 1% en poids par rapport au poids total de la composition.

La composition peut également comprendre des catalyseurs, tels que de l'acide phosphorique, hypophospho-

reux ($H_3PO_2$, $H_3PO_3$ et $H_3PO_4$).

Parmi les adjuvants aidant à la transformation ou processing aids, on peut citer les stéarates, tels que les stéarates de calcium ou de zinc, les cires naturelles, les polymères comprenant du tétrafluoroéthylène (TFE).

La proportion pondérale en processing aids est classiquement comprise entre 0,01 et 0,3% en poids, avantageusement entre 0,02 et 0,1% en poids, par rapport au poids total de la composition.

Parmi les charges, on peut citer la silice, le graphite, le graphite expansé, le noir de carbone, les billes de verre, le kaolin, la magnésie, les scories, le talc, les nanocharges (nanotubes de carbone), les pigments, oxydes métalliques (oxyde de titane), les métaux, les fibres (aramides, de verre, de carbone).

Les charges peuvent être des fibres ou un assemblage de fibres, de préférence de fibres longues, c'est-à-dire ayant un facteur de forme défini par le ratio de longueur sur diamètre de la fibre, ce qui signifie que ces fibres ont une section circulaire, supérieur à 1000, de préférence supérieur à 2000. Dans cet assemblage, les fibres peuvent être continues, sous forme de renfort unidirectionnel (UD) ou multidirectionnel (2D, 3D). En particulier, elles peuvent être sous forme de tissus, de nappes, de bandes ou de tresses et peuvent également être coupées par exemple sous forme de non tissés (mats) ou sous forme de feutres.

Ces fibres peuvent être choisies parmi :

- les fibres minérales,
- les fibres polymériques ou les mélanges des fibres citées.

Comme fibres minérales convenables pour l'invention, on peut citer les fibres de carbone, ce qui inclut les fibres de nanotubes ou nanotubes de carbone (NTC), les nanofibres de carbone ou les graphènes ; les fibres de silice comme les fibres de verre, notamment de type E, R ou S2 ; les fibres de bore ; les fibres céramiques, notamment fibres de carbure de silicium, fibres de carbure de bore, fibres de carbonitrure de bore, fibres de nitrure de silicium, fibres de nitrure de bore, les fibres de basalte ; les fibres ou filaments à base de métaux et/ou de leurs alliages ; les fibres des oxydes métalliques, notamment d'alumine ($Al_2O_3$) ; les fibres métallisées comme les fibres de verre métallisées et les fibres de carbone métallisées ou les mélanges des fibres précitées.

Plus particulièrement, ces fibres peuvent être choisies comme suit :

- les fibres minérales peuvent être choisies parmi : les fibres de carbone, les fibres de nanotubes de carbone, fibres de verre, notamment de type E, R ou S2, fibres de bore, fibres céramiques, notamment fibres de carbure de silicium, fibres de carbure de bore, fibres de carbonitrure de bore, fibres de nitrure de silicium, fibres de nitrure de bore, fibres de basalte, fibres ou filaments à base de métaux et/ou leurs alliages, fibres à base d'oxydes métalliques comme Al2O3, les fibres métallisées comme les fibres de verre métallisées et les fibres de carbone métallisées ou les mélanges des fibres précitées, et
- les fibres de polymère ou polymériques sont choisies parmi :
- les fibres de polymères thermodurcissables et plus particulièrement choisies parmi : les polyesters insaturés, les résines époxy, les esters vinyliques, les résines phénoliques, les polyuréthanes, les cyanoacrylates et les polyimides, tels que les résines bis-maléimide, les aminoplastes résultant de la réaction d'une amine telle que la mélamine avec un aldéhyde tel que le glyoxal ou le formaldéhyde
- les fibres de polymères thermoplastiques et plus particulièrement choisies parmi : le polyéthylène téréphtalate (PET), le polybutylène téréphtalate (PBT), les polyoléfines haute densité telles que le polyéthylène (PET), le polypropylène (PP) et les copolymères PET/PP, PVOH (polyvinyl alcool)
- les fibres de polyamides répondant à l'une des formules : 6, 11, 12, 6.10, 6.12, 6.6, 4.6,
- les fibres d'aramides (comme le Kevlar®) et polyamides aromatiques tels que ceux répondant à l'une des formules : PPD.T, MPD.I, PAA et PPA, avec PPD et MPD étant respectivement la p- et m-phénylène diamine, PAA étant les polyarylamides et PPA étant les polyphtalamides
- les fibres de copolymères blocs de polyamide tel que le polyamide/polyéther, les fibres de polyaryléthers cétones (PAEK) telles que la polyétheréther cétone (PEEK), la polyéthercétone cétone (PEKK), la polyéthercétoneéthercétone cétone (PEKEKK).

Les fibres préférées sont des fibres longues (à section circulaire) choisies parmi les : fibres de carbone, y compris métallisées, fibres de verre, y compris métallisées de type E, R, S2, fibres d'aramides (comme le Kevlar®) ou de polyamides aromatiques, les fibres de polyaryléthers cétones (PAEK), telle que la polyétheréther cétone (PEEK), fibres de la polyéthercétone cétone (PEKK), fibres de la polyéthercétoneéthercétone cétone (PEKEKK) ou leurs mélanges.

Les fibres plus particulièrement préférées sont choisies parmi : fibres de verre, fibres de carbone, de céramique et fibres d'aramides (comme le Kevlar®) ou leurs mélanges. Ces fibres ont une section circulaire.

En fonction de la nature des charges, la quantité de ces dernières peut représenter jusqu'à 70% en poids, notamment jusqu'à 60% en poids, en particulier jusqu'à 40% en poids, plus particulièrement jusqu'à 30% en poids, du poids total de la composition.

*Les polymères supplémentaires*

Une composition conforme à l'invention peut en outre comprendre un ou plusieurs polymères supplémentaires, un tel polymère étant distinct du (des) copolymère(s) à blocs mentionnés ci-avant.

Avantageusement, ce polymère supplémentaire peut notamment être choisi parmi un copolymère à blocs autre que celui défini précédemment, un polyamide, un polyamide-bloc-éther, un polyétheramide, un polyesteramide, un polysulfure de phénylène (PPS), un polyphénylène oxyde (PPO), un polymère fluoré, un caoutchouc naturel, un caoutchouc synthétique et leurs mélanges.

Le polymère supplémentaire peut également être choisi parmi l'amidon, qui peut être modifié et/ou formulé, la cellulose ou ses dérivés comme l'acétate de cellulose ou les éthers de cellulose, le polyacide lactique, le polyacide glycolique et les polyhydroxyalcanoates.

De préférence, le polymère supplémentaire est choisi parmi les polyamides aliphatiques et les polyamides-bloc-éthers. Parmi les polyamides aliphatiques, on peut notamment citer les polyamides à longue chaîne tels que les PA11, PA12, PA6.10, PA6.12, PA6.14, PA10.10, PA10.12 et PA12.12.

La composition peut ainsi contenir jusqu'à 20% en poids, par rapport au poids total de la composition, d'au moins un polymère supplémentaire.

*Procédé de préparation de la composition*

L'invention porte également sur le procédé de préparation de la composition selon l'invention.

Ce procédé comprend une étape d'incorporation des éventuels additifs et polymères supplémentaires au sein de la matrice du copolymère à blocs.

*Procédé de mise en œuvre de la composition ou du copolymère à bloc*

L'invention porte également sur un procédé de mise en œuvre de la composition selon l'invention.

Ce procédé comprend une étape d'injection, d'extrusion ou de pulvérisation de la composition.

*Utilisation*

L'invention porte sur l'utilisation d'un copolymère à blocs tel que défini ci-dessus ou de la composition telle que définie ci-dessus pour la protection de pièce constituée en tout ou partie de métal.

Ladite pièce peut être soit un matériau composite en tant que tel, soit un insert métallique.

De préférence, l'invention porte sur cette utilisation pour conférer au matériau à base de métal, sur lequel il est appliqué, des propriétés d'adhésion et/ou d'anti-corrosion.

Il a été observé de façon inattendue que ces copolymères à blocs, de structure spécifique, présentaient une affinité, notamment pour les surfaces métalliques ou contenant du métal.

Les copolymères selon l'invention présentent une excellente adhésion sur ce type de surface.

Ils présentent également l'avantage de protéger les surfaces enduites de la corrosion et de toutes les agressions externes que peuvent subir ces surfaces.

Ces copolymères sont des copolymères thermoplastiques et ne sont pas des caoutchoucs.

Par matériau à base de métal, on entend au sens de la présente invention des éléments métalliques façonnés en tout ou partie de métal ou encore des matériaux plastiques ou élastiques comportant des fibres métalliques.

Par conséquent, l'utilisation selon l'invention vise à conférer des propriétés anti-corrosion et/ou d'adhésion à une pièce comprenant une partie comprenant du métal, dont ladite partie est enduite par ledit copolymère.

Les exemples suivants servent à illustrer l'invention sans toutefois présenter un caractère limitatif.

EXEMPLES

I.Synthèse des copolymères à blocs

1/Synthèse du copolymère : Ref 1 (comparatif)

Le mélange de polybutadiène et de dimère d'acide gras en un rapport molaire de ½ (polybutadiène/dimère d'acide gras) est effectué.

Puis, le mélange obtenu est mélangé au polyamide comme décrit ci-dessous.

- Fabrication de PA 11 diamine de masse moléculaire en nombre 5000 g/mol :

   Dans un autoclave de 100L muni d'un agitateur type Paravisc, sont introduits 33 kg d'acide 11-aminoundecanoïque, 0.716 kgd'hexaméthylène diamine, 33g d'Irganox 1098, 23,3g d'acide orthophosphorique 85% et 5kg d'eau déionisée. Le milieu est inerté à l'azote puis chauffé jusqu'à 240°C matière sous agitation. La pression est alors de 24 bars.. Lorsque cette température est atteinte, la pression est ramenée à pression atmosphérique par détente et un balayage sous azote est appliqué pendant 90 minutes.
   Le produit obtenu est ainsi vidangé dans l'eau et récupéré sous forme d'écailles.
   Les fins de chaîne sont dosées par potentiométrie :
   $NH_2$ = 0.368 meq/g
   La Masse moléculaire est 5 434 g/mol.

- Fabrication d'un Pentabloc :

   Dans un autoclave de 100L muni d'un agitateur type Paravisc, sont introduits 3.786kgde Krasol® LBH-P 2000 (viscosité 13000 cP, Mn = 2100, 1.8 mol), 2.026kg de Pripol® 1013 (M=575 g/mol, 3.6 mol), et 6.85g d'acide orthophosphorique 85%. Le milieu est agité et est porté à une température de 220°C sous 200mbars pendant 2h. Le milieu est ramené à pression atmosphérique et refroidi. 19.14kg 3.6mol) du polyamide préparé précédemment sont ajoutés. Le milieu est chauffé à 235°C sous balayage azote et agitation. Puis un vide de 200mbars est appliqué pendant 2h Le produit est ensuite vidangé dans l'eau et granulé.
   Le dosage potentiométrique des fins de chaine :

   $NH_2$ = 0.132 meq/g
   COOH = 0.013 meq/g, soit Mn = 13800 g/mol

   La viscosité à l'état fondu est également mesurée par rhéologie oscillatoire à 288 Pa.s à 230°C/1Hz

Dosage potentiométrique des fins de chaine aminés :

500 mg de polymère sont dissouts dans 80g de m-crésol à130°C pendant 1h.
De l'acide perchlorique 0.02N (dans l'acide acétique) est ajouté jusqu'à neutralisation des fins de chaine amines. Cette neutralisation s'accompagne par une modification de potentiel, suivi à l'aide d'électrodes.

Dosage potentiométrique des fins de chaine acide :

1g de polymère est dissout dans 80g de ter-butylphénol à130°C pendant 1h.
De l'hydroxyde de tétra-n-butylammonium 0.02N est ajouté jusqu'à neutralisation des fins de chaine acide. Cette neutralisation s'accompagne par une modification de potentiel, suivi à l'aide d'électrodes.
Calcul de la masse moléculaire :

La masse moléculaire est calculée selon la formule ci-dessous :

$$Mn = 2/([COOH]+[NH2])$$

Avec [COOH] et [NH2] signifiant les concentrations en fins de chaine amine et acide telles que définies ci-dessus.

Mesure de la viscosité

La méthode utilisée est celle décrite dans la description ci-dessus, selon la norme ISO 6721-10 : 1999
Plan plan : 5% de déformation selon les conditions opératoires suivantes :

Appareil : PHYSICA MCR301
Géométrie : plans parallèles de 25mm de diamètre
Températures : 230°C
Fréquence : 100 à 0.01Hz

Durée : 10minutes
Atmosphère : Balayage d'azote.

2/Synthèse du copolymère A selon l'invention

Le procédé de préparation du copolymère à blocs A selon l'invention est identique à celui du polymère Ref 1, à l'exception du polyamide PA11 qui présente une masse moléculaire 10 300 g/mol.

Les proportions sont les suivantes :

- Pour le PA11 terminé diamine :

| | |
|---|---|
| Acide 11-aminoundécanoïque | 33.00 kg |
| Héxaméthylènediamine | 0.353 kg |
| Eau | 5.00 kg |
| IRGANOX | 33.00 g |
| H3PO4 85% | 23.3 g |

- Pour le polymère à blocs :

Krasol LBH-P2000 : 1.84 kg
Pripol 1013 : 0.985 kg
PA : 16.70 kg

Les fins de chaines dosées :

Pour le PA 11 :
NH2 = 0.193 meq/g, soit Mn = 10300

Pour le copolymère à blocs

NH2 = 0.090 meq/g
COOH = 0.028 meq/g
Soit Mn = 16 950g/mol

La viscosité à l'état fondu est également mesurée par rhéologie oscillatoire à 1 310 Pa.s à 230°C/1Hz

3/Synthèse du copolymère selon l'invention B

Le polymère Ref1 est ajouté dans une extrudeuse bi-vis co-rotative RHEOMEX PTW 16/25p équipée d'une filière 1 trou de diamètre 3mm avec 0.25% massique de dianhydride 3,3',4,4'-benzophénonetétracarboxylique. La vitesse de vis est de 400 rpm, le débit de 2,5 kg/h et un couple moyen de 30% et les fourreaux sont chauffés à une consigne de 230°C. En sortie de filière, le polymère est refroidi dans un bac à eau à 23°C puis granulé.

Les fins de chaine et la Mn du polymère à blocs obtenu sont ensuite dosées par potentiométrie :

COOH = 0.024 meq/g
NH2 = 0.104 meq/g
Mn = 15 625 g/mol

La viscosité à l'état fondu est également mesurée par rhéologie oscillatoire à 1080 Pa.s à 230°C/1Hz.

Tableau 1

| Copolymère | Viscosité à l'état fondu (Pa.s) |
|---|---|
| Ref 1 | 288 |
| A | 1310 |

(suite)

| Copolymère | Viscosité à l'état fondu (Pa.s) |
|---|---|
| B | 1080 |

## II.Préparation de la pièce extrudée/enduite

A titre d'exemple, le recouvrement d'un élément filaire de diamètre proche de 0,35 mm, par exemple d'un câble métallique constitué simplement de trois mono fils élémentaires de diamètre 0,18 mm torsadés ensemble, par une première couche de copolymère à blocs d'épaisseur maximale égale à environ 0,25 mm au diamètre, pour l'obtention d'un élément filaire gainé ayant un diamètre total d'environ 0,6mm, est réalisé sur une ligne d'extrusion-gainage comportant deux filières, une première filière (contre-filière ou filière amont) de diamètre égal à environ 0,41 mm et une seconde filière (ou filière aval) de diamètre égal à environ 0,53 mm, disposées toutes deux dans une tête d'extrusion portée à environ 210°C.

Le copolymère à blocs, fondu à une température de 210°C à 230°C selon les zones de chauffe de la vis d'extrusion (Z1=210°C, Z2 = 220°C, Z3=230°C, Collier = 220°C) dans l'extrudeuse, recouvre ainsi l'élément filaire, par le biais de la tête de gainage, à une vitesse de défilement de l'élément filaire égale typiquement à plusieurs dizaines de m/min, pour un débit de pompe d'extrusion typiquement de plusieurs dizaines de cm3/min. En sortie de ce gainage, l'élément filaire peut être immergé dans un bac de refroidissement rempli d'eau froide, pour solidifier et figer le polyamide dans son état amorphe, puis séché par exemple par passage de la bobine de réception à l'étuve.

## III.Tests et résultats

### Description du test d'adhésion :

La qualité de la liaison entre le caoutchouc et les renforts composites précédemment fabriqués est ensuite appréciée par un test dans lequel on mesure la force nécessaire pour extraire les renforts d'une composition de caoutchouc vulcanisée, dit encore vulcanisat. Cette composition de caoutchouc est une composition conventionnelle utilisée pour le calandrage de nappes métalliques de ceinture de pneumatique, à base de caoutchouc naturel, de noir de carbone et des additifs usuels.

### Composition de caoutchouc utilisée :

La composition de caoutchouc comprend 100 pce de caoutchouc naturel, 70 pce de noir de carbone série 300, 1,5 pce de N-1, 3-diméthylbutyl-N-phényl-para-phénylènediamine, 1 pce d'un sel de cobalt, 0,9 pce d'acide stéarique, 6 pce de soufre insoluble moléculaire, 0,8 pce de N-tertiarybutyl-2-benzothiazole sulfamide et 7,5 pce de ZnO.

Le vulcanisat est un bloc de caoutchouc constitué de deux plaques de dimensions 200 mm par 4,5 mm et d'épaisseur 3,5 mm, appliquées l'une sur l'autre avant cuisson (l'épaisseur du bloc résultant est alors de 7 mm). C'est lors de la confection de ce bloc que les renforts composites (15 brins au total) sont emprisonnés entre les deux plaques de caoutchouc à l'état cru, à égale distance et en laissant dépasser de part et d'autre de ces plaques une extrémité de l'élément composite de longueur suffisante pour la traction ultérieure. Le bloc comportant les renforts est alors placé dans un moule adapté puis cuit sous pression. La cuisson du bloc est réalisée à 160°C pendant 15 min, sous une pression de 16 bars.

A l'issue de la cuisson, l'éprouvette ainsi constituée du bloc vulcanisé et des 15 renforts est mise en place dans les mâchoires d'une machine de traction adaptée pour permettre de tractionner chaque renfort isolément hors du caoutchouc, à une vitesse et une température données : à 50 mm/min et 20°C.

On caractérise les niveaux d'adhésion en mesurant la force dite d'arrachage (notée Fmax) pour arracher les renforts de l'éprouvette (moyenne sur 15 tractions).

### 1/Traction à 23°C

Tableau 2

| | Fmoy (N/mm$^2$) | Fmax (N/mm$^2$) |
|---|---|---|
| Ref 1 | 14,2 | 15,6 |

(suite)

|   | Fmoy (N/mm$^2$) | Fmax (N/mm$^2$) |
|---|---|---|
| A | 18,9 | 20,2 |
| B | 20,0 | 23,3 |

### 2/Traction à 100°C

Tableau 3

|   | Fmoy (N/mm$^2$) | Fmax (N/mm$^2$) |
|---|---|---|
| Ref 1 | 5,8 | 6,6 |

### 3/Traction à 120°C

Tableau 4

|   | Fmoy (N/mm$^2$) | Fmax (N/mm$^2$) |
|---|---|---|
| A | 7,5 | 8,2 |
| B | 7,6 | 8,4 |

### IV.Conclusion

Ces résultats montrent que le copolymère à bloc selon l'invention permet d'obtenir une adhésion, que ce soit à température ambiante ou à température plus élevée, améliorée par rapport à un copolymère à blocs ne présentant la viscosité spécifique revendiquée

## Revendications

**1.** Copolymère à blocs comprenant :

- au moins un bloc polyamide,
- au moins un bloc polyoléfine étant un homopolymère ou copolymère comprenant un ou plusieurs motifs oléfines, choisis parmi l'éthylène, le propylène, le butène-1, l'octène-1 et le butadiène,
- au moins un bloc alkylène issu d'un diacide en $C_2$-$C_{36}$, étant une chaîne aliphatique, linéaire, saturée;

et ledit copolymère à blocs présentant une viscosité à l'état fondu allant de 300 Pa.s à 20 000 Pa.s, en particulier de 300 à 15 000 Pa.s, mesurée à 230°C par rhéologie oscillatoire, à une fréquence de 1 Hz et 5 % de déformation selon la norme ISO 6721-10 :1999, le copolymère étant de formule suivante :

PA-(R-Pol-R-P A)n-R-Pol-R-PA

Avec n compris entre 0 et 100, en particulier de 0 à 10, de préférence 0 ou 1,
PA désignant le bloc polyamide,
R désignant le bloc alkylène,
Pol désignant le bloc polyoléfine, ledit copolymère à blocs comprenant une teneur en bloc polyoléfine comprise entre 2 et 98% en poids par rapport au poids total du copolymère à blocs.

**2.** Copolymère selon la revendication 1, **caractérisé en ce que** le ou les blocs polyamide sont aliphatiques.

**3.** Copolymère selon la revendication 1 ou 2, **caractérisé en ce que** le ou les blocs polyamide présentent chacun une masse moléculaire en nombre mesurée par potentiométrie comprise entre 4 000 et 20 000 g/mol.

**4.** Copolymère selon l'une quelconque des revendications précédentes, **caractérisé en ce que** le ou les blocs polyamide comprennent au moins un motif choisi parmi PA 6, PA 11, PA12, PA6.10, PA 6.6, PA6.12, PA 10.10, PA 10.12.

**5.** Copolymère selon l'une quelconque des revendications précédentes, **caractérisé en ce que** le ou les blocs polyoléfine présentent chacun une viscosité inférieure à 60 000 cps, de préférence inférieure à 40 000 cps, et de préférence inférieure à 20 000 cps, et de façon encore préférentielle entre 1 000 et 20 000 cps, la viscosité étant mesurée à 25°C avec un appareil de Brookfield et selon la méthode Brookfield.

**6.** Copolymère selon l'une quelconque des revendications précédentes, **caractérisée en ce que** le ou les blocs polyoléfine sont du polybutadiène.

**7.** Copolymère selon l'une quelconque des revendications précédentes, **caractérisé en ce que** le ou les blocs alkylène sont des dimères d'acide gras, de préférence des diacides en $C_8$-$C_{36}$.

**8.** Copolymère à blocs selon l'une quelconque des revendications précédentes, **caractérisé en ce que**

- la teneur en bloc polyamide est comprise entre 2 et 98% en poids par rapport au poids total du copolymère à blocs, et
- la teneur en bloc alkylène est comprise entre 0,1 et 25%, de préférence entre 1 et 15% en poids par rapport au poids total du copolymère à blocs.

**9.** Copolymère selon l'une quelconque des revendications précédentes, **caractérisé en ce que** le copolymère à blocs comprend au moins un bloc allongeur de chaîne.

**10.** Copolymère selon la revendication précédente, **caractérisé en ce qu'**il est de formule suivante :

X-(copo blocs)-(Ya-A'-Ya)-[(copo blocs)-(Ya-A'-Ya)]m-(copo blocs)-X Dans laquelle

- (copo blocs) désigne le copolymère à blocs tel que défini à l'une quelconque des revendications 1 à 8,
- (Ya-A'-Ya) désigne un allongeur de chaine Y1-A'-Y1

pour lequel
les fonctions réactives Y1 ont réagi avec les extrémités du copolymère à blocs conduisant à des fonctions Ya, A' désigne un biradical hydrocarboné de structure non polymérique,

- m est un entier entre 0 et 100,
- X désigne la fonction libre du copolymère à blocs.

**11.** Copolymère selon la revendication 9 ou 10, **caractérisé en ce que** l'allongeur de chaîne est le di anhydride 3 ,3 ',4,4 '-benzophénone tétracarboxylique.

**12.** Procédé de préparation du copolymère tel que défini à l'une quelconque des revendications précédentes, comportant une étape de mélange des différents blocs.

**13.** Procédé selon la revendication 12, comportant les étapes successives suivantes :

- une étape de mélange des blocs polyoléfine et alkylène, le rapport molaire entre les blocs polyoléfine et les blocs alkylène étant supérieur ou égal à ½, puis
- une étape de mélange du ou des blocs polyamide avec le mélange obtenu à l'étape précédente.

**14.** Procédé de préparation selon les revendications 12 et 13, **caractérisé en ce qu'**il comprend une étape supplémentaire de mélange du ou des blocs allongeur de chaine avec le mélange obtenu à l'étape précédente.

**15.** Composition comprenant au moins un copolymère à blocs tel que défini à l'une quelconque des revendications 1 à 11.

16. Composition selon la revendication 15, **caractérisée en ce qu'**elle se trouve sous forme de poudre ou de granulés.

17. Procédé de mise en œuvre de la composition définie à la revendication 15 ou 16, comprenant une étape d'injection, d'extrusion ou de pulvérisation.

18. Utilisation du copolymère à bloc tel que défini à l'une quelconque des revendications 1 à 11 ou de la composition telle que définie à la revendication 15 ou 16, pour conférer des propriétés d'anti-corrosion à une pièce comprenant une partie, comprenant du métal, dont ladite partie est enduite par ledit copolymère.

19. Utilisation du copolymère à bloc tel que défini à l'une quelconque des revendications 1 à 11 ou de la composition telle que définie à la revendication 15 ou 16, pour conférer des propriétés d'adhésion à une pièce comprenant une partie, comprenant du métal, dont ladite partie est enduite par ledit copolymère.

20. Utilisation du copolymère à bloc tel que défini à l'une quelconque des revendications 1 à 11 ou de la composition telle que définie à la revendication 15 ou 16, pour conférer des propriétés d' anti-corrosion et d'adhésion à une pièce comprenant une partie, comprenant du métal, dont ladite partie est enduite par ledit copolymère.

**Patentansprüche**

1. Blockcopolymer, umfassend:

   - mindestens einen Polyamidblock,
   - mindestens einen Polyolefinblock, der ein Homopolymer oder Copolymer ist, umfassend eine oder mehrere Olefineinheiten, ausgewählt aus Ethylen, Propylen, 1-Buten, 1-Octen und Butadien,
   - wobei mindestens ein Alkylenblock, der aus einer $C_2$-$C_{36}$-Disäure stammt, eine aliphatische, lineare, gesättigte Kette ist;

   und wobei das Blockcopolymer
   eine Schmelzviskosität, die von 300 Pa.s bis 20.000 Pa.s, insbesondere von 300 bis 15.000 Pa.s reicht, gemessen bei 230 °C durch Oszillationsrheologie bei einer Frequenz von 1 Hz und 5 % Deformation gemäß der Norm ISO 6721-10:1999, aufweist, wobei das Copolymer von folgender Formel ist:

   PA-(R-Pol-R-PA)n-R-Pol-R-PA

   wobei n zwischen 0 und 100 beträgt, insbesondere von 0 bis 10, vorzugsweise 0 oder 1,
   wobei PA für den Polyamidblock steht,
   wobei R für den Alkylenblock steht,
   wobei Pol für den Polyolefinblock steht, wobei das Blockcopolymer einen Polyolefinblockgehalt zwischen 2 und 98 Gew.-%, bezogen auf das Gesamtgewicht des Blockcopolymers, umfasst.

2. Copolymer nach Anspruch 1, **dadurch gekennzeichnet, dass** der oder die Polyamidblöcke aliphatisch sind.

3. Copolymer nach Anspruch 1 oder 2, **dadurch gekennzeichnet, dass** der oder die Polyamidblöcke jeweils ein durch Potentiometrie gemessenes Molekulargewicht zwischen 4.000 und 20.000 g/mol aufweisen.

4. Copolymer nach einem der vorstehenden Ansprüche, **dadurch gekennzeichnet, dass** der oder die Polyamidblöcke mindestens eine Einheit umfassen, die aus PA 6, PA 11, PA12, PA 6.10, PA 6.6, PA 6.12, PA 10.10, PA 10.12 ausgewählt ist.

5. Copolymer nach einem der vorstehenden Ansprüche, **dadurch gekennzeichnet, dass** der oder die Polyolefinblöcke jeweils eine Viskosität von weniger als 60.000 cPs, vorzugsweise weniger als 40.000 cPs und vorzugsweise weniger als 20.000 cPs und noch mehr bevorzugt zwischen 1.000 und 20.000 cPs aufweisen, wobei die Viskosität bei 25 °C mit einer Brookfield-Apparatur und nach dem Brookfield-Verfahren gemessen wird.

6. Copolymer nach einem der vorstehenden Ansprüche, **dadurch gekennzeichnet, dass** der oder die Polyolefinblöcke Polybutadien sind.

7. Copolymer nach einem der vorstehenden Ansprüche, **dadurch gekennzeichnet, dass** der oder die Alkylenblöcke Fettsäuredimere, vorzugsweise $C_8$-$C_{36}$-Disäuren, sind.

8. Blockcopolymer nach einem der vorstehenden Ansprüche, **dadurch gekennzeichnet, dass**

   - der Polyamidblockgehalt zwischen 2 und 98 Gew.-%, bezogen auf das Gesamtgewicht des Blockcopolymers, beträgt,
   und
   - der Alkylenblockgehalt zwischen 0,1 und 25 Gew.-%, vorzugsweise zwischen 1 und 15 Gew.-%, bezogen auf das Gesamtgewicht des Blockcopolymers, beträgt.

9. Copolymer nach einem der vorstehenden Ansprüche, **dadurch gekennzeichnet, dass** das Blockcopolymer mindestens einen Kettenverlängererblock umfasst.

10. Copolymer nach dem vorstehenden Anspruch, **dadurch gekennzeichnet, dass** es von folgender Formel ist:
    X-(Copo-Blöcke)-(Ya-A'-Ya)-[(Copo-Blöcke)-(Ya-A'-Ya)]m-(Copo-Blöcke)-X
    worin

    - (Copo-Blöcke) für das Blockcopolymer nach einem der Ansprüche 1 bis 8 steht,
    - (Ya-A'-Ya) für den Kettenverlängerer Y1-A-Y1 steht bei dem

      die reaktiven Funktionen Y1 mit den Enden des Blockcopolymers reagiert haben, was zu Funktionen Ya führt,
      A' für ein Kohlenwasserstoff-Biradikal mit nichtpolymerer Struktur steht,

    - m eine ganze Zahl zwischen 0 und 100 ist,
    - X für die freie Funktion des Blockcopolymers steht.

11. Copolymer nach Anspruch 9 oder 10, **dadurch gekennzeichnet, dass** der Kettenverlängerer 3,3',4,4'-Benzophenontetracarbonsäuredianhydrid ist.

12. Verfahren zur Herstellung des Copolymers nach einem der vorstehenden Ansprüche, beinhaltend einen Schritt des Mischens der verschiedenen Blöcke.

13. Verfahren nach Anspruch 12, beinhaltend die folgenden aufeinanderfolgenden Schritte:

    - einen Schritt des Mischens der Polyolefin- und Alkylenblöcke, wobei das Molverhältnis zwischen den Polyolefinblöcken und den Alkylenblöcken größer oder gleich 1/2 ist, anschließend
    - einen Schritt des Mischens des oder der Polyamidblöcke mit der im vorherigen Schritt erhaltenen Mischung.

14. Verfahren nach einem der Ansprüche 12 und 13, **dadurch gekennzeichnet, dass es** einen zusätzlichen Schritt des Mischens des oder der Kettenverlängererblöcke mit der im vorherigen Schritt erhaltenen Mischung umfasst.

15. Zusammensetzung, umfassend mindestens ein Blockcopolymer nach einem der Ansprüche 1 bis 11.

16. Zusammensetzung nach Anspruch 15, **dadurch gekennzeichnet, dass sie** in Form von Pulver oder Granulat vorliegt.

17. Verfahren zum Einsatz der in Anspruch 15 oder 16 definierten Zusammensetzung, umfassend einen Injektions-, Extrusions- oder Sprühschritt.

18. Verwendung des Blockcopolymers nach einem der Ansprüche 1 bis 11 oder der Zusammensetzung nach Anspruch 15 oder 16, um einem Teil, das einen Abschnitt umfasst, der Metall umfasst, Korrosionsschutzeigenschaften zu verleihen, wobei der Abschnitt mit dem Copolymer beschichtet ist.

19. Verwendung des Blockcopolymers nach einem der Ansprüche 1 bis 11 oder der Zusammensetzung nach Anspruch 15 oder 16, um einem Teil, das einen Abschnitt umfasst, der Metall umfasst, Adhäsionseigenschaften zu verleihen, wobei der Abschnitt mit dem Copolymer beschichtet ist.

## EP 3 433 303 B1

**20.** Verwendung des Blockcopolymers nach einem der Ansprüche 1 bis 11 oder der Zusammensetzung nach Anspruch 15 oder 16, um einem Teil, das einen Abschnitt umfasst, der Metall umfasst, Korrosionsschutz- und Adhäsionseigenschaften zu verleihen, wobei der Abschnitt mit dem Copolymer beschichtet ist.

**Claims**

**1.** A block copolymer comprising:

- at least one polyamide block,
- at least one polyolefin block being a homopolymer or copolymer comprising one or several olefin units, chosen from ethylene, propylene, butene-1, octene-1 and butadiene,
- at least one alkylene block derived from a $C_2$-$C_{36}$ diacid, being an aliphatic, linear, saturated chain;

and said block copolymer having a molten viscosity ranging from 300 Pa.s to 20,000 Pa.s, in particular from 300 to 15,000 Pa.s, measured at 230°C by oscillatory rheology, at a frequency of 1 Hz and 5% deformation according to ISO standard 6721-10:1999, the copolymer having the following formula:

PA-(R-Pol-R-PA)n-R-Pol-R-PA

With n between 0 and 100, in particular from 0 to 10, preferably 0 or 1,
PA designating the polyamide block,
R designating the alkylene block,
Pol designating the polyolefin block, said block copolymer comprising a polyolefin block content of between 2 and 98% by weight relative to the total weight of the block copolymer.

**2.** The copolymer according to claim 1, **characterized in that** the polyamide block(s) are aliphatic.

**3.** The copolymer according to claim 1 or 2, **characterized in that** the polyamide block(s) each have a number-average molecular weight measured by potentiometry of between 4,000 and 20,000 g/mol.

**4.** The copolymer according to one of the preceding claims, **characterized in that** the polyamide block(s) comprise at least one unit chosen from PA 6, PA 11, PA12, PA 6.10, PA 6.6, PA 6.12, PA 10.10, PA 10.12.

**5.** The copolymer according to any one of the preceding claims, **characterized in that** the polyolefin block(s) each have a viscosity of less than 60,000 cps, preferably less than 40,000 cps, and preferably less than 20,000 cps, and still more preferentially between 1,000 and 20,000 cps, the viscosity being measured at 25°C with a Brookfield apparatus and according to the Brookfield method.

**6.** The copolymer according to any one of the preceding claims, **characterized in that** the polyolefin block(s) are polybutadiene.

**7.** The copolymer according to any one of the preceding claims, **characterized in that** the alkylene block(s) are fatty acid dimers, preferably $C_8$-$C_{36}$ diacids.

**8.** The block copolymer according to any one of the preceding claims, **characterized in that**

- the polyamide block content level is between 2 and 98% by weight relative to the total weight of the block copolymer,
and
- the alkylene block content level is between 0.1 and 25%, preferably between 1 and 15% by weight relative to the total weight of the block copolymer.

**9.** The copolymer according to any one of the preceding claims, **characterized in that** the block copolymer comprises at least one chain extender block.

**10.** The copolymer according to the preceding claim, **characterized in that** it has the following formula:
X-(block copo)-(Ya-A'-Ya)-[(block copo)-(Ya-A'-Ya)]m-(block copo)-X

Wherein

- (block copo) designates the block copolymer as defined in any one of claims 1 to 8
- (Ya-A'-Ya) designates a Y1-A'-Y1 chain extender

for which

the Y1 reactive functions have reacted with the ends of the block copolymer leading to Ya functions,
A' designates a hydrocarbon biradical of non-polymeric structure,

- m is an integer between 0 and 100;
- X designates the free function of the block copolymer.

11. The copolymer according to claim 9 or 10, **characterized in that** the chain extender is the 3,3',4,4'-benzophenone tetracarboxylic dianhydride.

12. A method for preparation of the copolymer as defined in any one of the preceding claims, including a step for mixing the different blocks.

13. The method according to claim 12, including the following successive steps:

- a step of mixing the polyolefin and alkylene blocks, the molar ratio between the polyolefin blocks and the alkylene blocks being greater than or equal to 1/2, then
- a step of mixing the polyamide block(s) with the mixture obtained in the previous step.

14. The preparation method according to claims 12 and 13, **characterized in that** it comprises an additional step of mixing the chain extender block(s) with the mixture obtained in the previous step.

15. A composition comprising at least one block copolymer as defined in any one of claims 1 to 11.

16. The composition according to claim 15, **characterized in that** it is in the form of a powder or granules.

17. A method for implementing the composition defined in claim 15 or 16, comprising an injection, extrusion or spraying step.

18. A use of the block copolymer as defined in any one of claims 1 to 11 or of the composition as defined in claim 15 or 16, to impart anti-corrosion properties to a part comprising a portion, comprising metal, whereof said portion is coated by said copolymer.

19. A use of the block copolymer as defined in any one of claims 1 to 11 or of the composition as defined in claim 15 or 16, to impart adhesion properties to a part comprising a portion, comprising metal, whereof said portion is coated by said copolymer.

20. A use of the block copolymer as defined in any one of claims 1 to 11 or of the composition as defined in claim 15 or 16, to impart anti-corrosion and adhesion properties to a part comprising a portion, comprising metal, whereof said portion is coated by said copolymer.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2012080404 A1
- WO 9700293 A1
- US 4018731 A
- US 4567226 A
- FR 2510121 A1
- US 2012000541 A1

- EP 0471566 A
- EP 0581642 A
- EP 0739924 A
- EP 0581641 A
- EP 0425341 A

**Littérature non-brevet citée dans la description**

- Cycloaliphatic Amines. **KIRK-OTHMER.** Encyclopaedia of Chemical Technology. 1992, 386-405